# EUROPÄISCHE PATENTANMELDUNG

(11) **EP 4 575 486 A1**
(43) Veröffentlichungstag der Anmeldung: **25.06.2025**
(21) Anmeldenummer: 23219806.9
(22) Anmeldetag: 22.12.2023
(51) Int. Cl.: G01N 29/06, G01N 29/14, G01N 29/44, G01N 29/46

(54) **VERFAHREN ZUR ÜBERWACHUNG EINES FUNKTIONSZUSTANDES WENIGSTENS EINES HAUSHALTSGERÄTS UND ÜBERWACHUNGSSYSTEM**

(71) Anmelder: Vorwerk & Co. Interholding GmbH, 42275 Wuppertal (DE)
(72) Erfinder: Fleczok, Benjamin, 45144 Essen (DE); Nezami, Amin, 42369 Wuppertal (DE)
(74) Vertreter: Bals & Vogel Patentanwälte PartGmbB

(57) **Zusammenfassung**

Die Erfindung betrifft ein Verfahren (100) zur Überwachung eines Funktionszustandes wenigstens eines Haushaltsgeräts (11) in einer Haushaltsumgebung (12) durch ein Überwachungssystem (10), umfassend wenigstens eine Überwachungseinheit (13), das Verfahren (100) umfassend:
- Empfangen (110) eines akustischen Signals (S) aus der Haushaltsumgebung (12) in der Überwachungseinheit (13),
- Auswerten (120) des akustischen Signals (S) und Bereitstellen eines Auswertungsdatensatzes (500),
- Identifizieren (130) eines Haushaltsgeräts (11) in der Haushaltsumgebung (12) als Quelle des akustischen Signals (S) in Abhängigkeit des Auswertungsdatensatzes (500) und Bereitstellen eines Gerätedatensatzes (600),
- Bestimmen (140) eines Funktionszustands des Haushaltsgeräts (11) in Abhängigkeit des Auswertungsdatensatzes (500) und des Gerätedatensatzes (600).

## Beschreibung

Die Erfindung betrifft ein Verfahren mit den Merkmalen des unabhängigen Patentanspruchs 1, ein Überwachungssystem mit den Merkmalen des unabhängigen Patentanspruchs 13, ein Computerprogrammprodukt mit den Merkmalen des unabhängigen Patentanspruchs 15 sowie ferner ein computerlesbares Speichermedium und ein Datenträgersignal.

Im Kontext einer Haushaltsumgebung werden verschiedene Haushaltsgeräte zur Unterstützung oder auch automatischen Durchführung von Haushaltsaufgaben regelmäßig betrieben. So werden bspw. Reinigungsroboter, insbesondere Staubsaugerroboter, oder klassische Staubsauger zur Bodenreinigung, Küchenmaschinen und Öfen zur Zubereitung von Speisen, Waschmaschinen und Wäschetrockner zur Textilreinigung oder Spülmaschinen zur Geschirreinigung eingesetzt.

Der Funktionszustand von Haushaltsgeräten kann durch fehlerhafte Bedienung und/oder Alterungs- bzw. Verschleißerscheinungen beeinflusst werden. So kann bspw. ein Staubsauger durch einen Benutzer in Betrieb genommen werden, ohne dass ein Staubsaugerbeutel eingesetzt ist. Auch kann bspw. eine Küchenmaschine in Betrieb genommen werden, ohne dass ein für den Betrieb benötigtes Werkzeug, insbesondere Messer, in der Maschine eingesetzt ist. In beiden Fällen ergibt sich ein fehlerhafter Funktionszustand des betreffenden Haushaltsgeräts aufgrund einer fehlerhaften Bedienung durch einen Benutzer. Das durch den Benutzer angestrebte Resultat in Bezug auf einen Betrieb des Haushaltsgeräts wird in der Folge nicht oder nicht in ausreichender Qualität erreicht. Auch sind Haushaltsgeräte in ihrem Betrieb Alterungs- bzw. Verschleißmechanismen ausgesetzt. Bspw. kann ein Werkzeug einer Küchenmaschine, insbesondere ein Messer, mit einer wachsenden Anzahl von Betriebsstunden an Schärfe einbüßen, wodurch eine Zerkleinerung von Schnittgut innerhalb der Küchenmaschine zunehmend ineffizient und das angestrebte Ergebnis in seiner Qualität verschlechtert wird. In Bezug auf einen Staubsauger kann ferner die Saugleistung aufgrund eines zunehmend gefüllten Filterbeutels im Zuge eines regelmäßigen Betriebs des Staubsaugers abnehmen. Auch können durch Verschleißerscheinungen mechanische Bauteile, wie bspw. Lager, betroffen sein, was in der Folge einen steigenden Energiebedarf des Haushaltsgeräts und/oder störende Betriebsgeräusche verursachen können. Wird ein fehlerhafter Funktionszustand nicht frühzeitig erkannt, so kann dies im Falle eines weiteren Betriebs des betreffenden Haushaltsgeräts ferner Folgeschäden auslösen, welche den sicheren und zuverlässigen Betrieb des betreffenden Haushaltsgeräts zusätzlich beeinträchtigen.

Es ist daher erstrebenswert den Funktionszustand eines Haushaltsgeräts, insbesondere im Hinblick auf dessen Einsatzbereitschaft, innerhalb einer Haushaltsumgebung möglichst einfach und zuverlässig bestimmen zu können. Hierdurch kann verschleißbedingten Ausfällen und/oder Ausfällen oder Problemen aufgrund einer fehlerhaften Bedienung des Haushaltsgeräts frühzeitig vorgebeugt werden. So kann die Verfügbarkeit des Haushaltsgeräts und dessen Lebensdauer gesteigert werden. Auch kann eine alterungs- und/oder benutzerbedingte Qualitätseinbuße in Bezug auf die mit dem Haushaltsgerät erzielbaren Arbeitsergebnisse reduziert bzw. vermieden werden.

Es ist daher eine Aufgabe der vorliegenden Erfindung, wenigstens einen der voranstehend beschriebenen Nachteile zumindest teilweise zu überwinden. Insbesondere ist es Aufgabe der Erfindung ein Verfahren zur Überwachung eines Funktionszustandes, insbesondere Funktionszustandes, wenigstens eines Haushaltsgeräts, ein Überwachungssystem, ein Computerprogrammprodukt, ein computerlesbares Speichermedium sowie ein Datenträgersignal bereitzustellen, durch welche jeweils eine verbesserte und/oder vereinfachte Bestimmung eines Funktionszustands eines Haushaltsgeräts innerhalb einer Haushaltsumgebung ermöglicht wird.

Die voranstehende Aufgabe wird gelöst durch ein Verfahren gemäß einem ersten Aspekt der vorliegenden Erfindung, durch ein Überwachungssystem gemäß einem zweiten Aspekt der vorliegenden Erfindung, durch ein Computerprogrammprodukt gemäß einem dritten Aspekt der vorliegenden Erfindung, durch ein computerlesbares Speichermedium gemäß einem vierten Aspekt der vorliegenden Erfindung sowie durch ein Datenträgersignal gemäß einem fünften Aspekt der vorliegenden Erfindung. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Überwachungssystem und/oder im Zusammenhang mit dem erfindungsgemäßen Computerprogrammprodukt und/oder im Zusammenhang mit dem erfindungsgemäßen computerlesbaren Speichermedium und/oder im Zusammenhang mit dem erfindungsgemäßen Datenträgersignal und jeweils umgekehrt, sodass bezüglich der Offenbarung zu den einzelnen Erfindungsaspekten stets wechselseitig Bezug genommen wird bzw. werden kann.

Gemäß dem ersten Aspekt der vorliegenden Erfindung ist ein Verfahren zur Überwachung eines Funktionszustandes wenigstens eines Haushaltsgeräts in einer Haushaltsumgebung (gemeint ist: Umgebung in einem Haushalt) durch ein Überwachungssystem vorgesehen, wobei das Überwachungssystem wenigstens eine Überwachungseinheit umfasst und wobei das Verfahren wenigstens die folgenden umfasst:
- Empfangen eines akustischen Signals aus der Haushaltsumgebung in der Überwachungseinheit, insbesondere durch eine Empfangseinheit der Überwachungseinheit,
- Auswerten des akustischen Signals und Bereitstellen eines Auswertungsdatensatzes, insbesondere durch eine Auswerteeinheit der Überwachungseinheit und/oder einen zentralen Rechner,
- Identifizieren eines Haushaltsgeräts in der Haushaltsumgebung als Quelle des akustischen Signals in Abhängigkeit des Auswertungsdatensatzes und Bereitstellen eines, insbesondere für das identifizierte Haushaltsgerät spezifischen, Gerätedatensatzes, insbesondere durch eine Identifikationseinheit der Überwachungseinheit und/oder einen zentralen Rechner und/oder das Haushaltsgerät,
- Bestimmen eines, insbesondere aktuellen, Funktionszustands des als Quelle des akustischen Signals identifizierten Haushaltsgeräts in Abhängigkeit des Auswertungsdatensatzes und des Gerätedatensatzes, insbesondere durch eine Zustandsbestimmungseinheit der Überwachungseinheit und/oder einen zentralen Rechner.

In anderen Worten ist ein Verfahren zur Überwachung eines Funktionszustandes wenigstens eines in einer Haushaltsumgebung befindlichen Haushaltsgeräts vorgesehen. Die Überwachung erfolgt durch ein Überwachungssystem, welches wenigstens eine Überwachungseinheit umfasst.

Es ist vorgesehen, dass ein akustisches Signal aus der Haushaltsumgebung in der Überwachungseinheit empfangen wird. Der Empfang des akustischen Signals kann bspw. durch wenigstens eine Empfangseinheit der Überwachungseinheit erfolgen.

Ferner ist vorgesehen, dass das akustische Signal ausgewertet wird und ein Auswertungsdatensatz als Ergebnis dieser Auswertung bereitgestellt wird. Das Auswerten des akustischen Signals kann zumindest teilweise durch die Überwachungseinheit erfolgen. Zusätzlich oder alternativ kann das Auswerten des akustischen Signals zumindest teilweise durch einen zentralen Server erfolgen.

In Abhängigkeit des Auswertedatensatzes wird ferner ein Haushaltsgerät in der Haushaltsumgebung als Quelle (Emittent) des akustischen Signals identifiziert und ein Gerätedatensatz bereitgestellt, wobei vorzugsweise der Gerätedatensatz für das als Quelle des akustischen Signals identifizierte Haushaltsgerät charakteristisch bzw. spezifisch ist. Das Identifizieren und/oder Bereitstellen des Gerätedatensatzes kann insbesondere durch eine Identifikationseinheit der Überwachungseinheit und/oder einen zentralen Rechner erfolgen.

Zur Bereitstellung des Gerätedatensatzes können Gerätedaten zu wenigstens einem Haushaltsgerät auf wenigstens einem Haushaltsgerät und/oder wenigstens einer Überwachungseinheit und/oder wenigstens einem zentralen Server gespeichert sein.

Zusätzlich oder alternativ kann der Gerätedatensatz durch das als Quelle des akustischen Signals identifizierte Haushaltsgerät bereitgestellt und an die Überwachungseinheit und/oder einen zentralen Server übermittelt werden. In diesem Zusammenhang ist denkbar, dass wenigstens eines der folgenden durch das Verfahren, insbesondere durch das Bereitstellen des Gerätedatensatzes, umfasst ist:
- Anfragen eines Gerätedatensatzes bei dem als Quelle des akustischen Signals identifizierten Haushaltsgerät,
- Übermitteln des Gerätedatensatzes von dem als Quelle des akustischen Signals identifizierten Haushaltsgerät an die Überwachungseinheit und/oder einen zentralen Server.

Ferner ist vorgesehen, dass in Abhängigkeit des Auswertungsdatensatzes und des Gerätedatensatzes ein, insbesondere aktueller, Funktionszustand des als Quelle des akustischen Signals identifizierten Haushaltsgeräts bestimmt wird. Die Bestimmung des Funktionszustands kann vorzugsweise durch eine Zustandsbestimmungseinheit der Überwachungseinheit und/oder einen zentralen Rechner erfolgen.

Das erfindungsgemäße Verfahren bietet den Vorteil, dass in einer Haushaltsumgebung durch Haushaltsgeräte emittierte akustische Signale ein einer Überwachungseinheit zentralisiert empfangen und verarbeitet bzw. zur weiteren Verarbeitung weiterkommuniziert werden können. Auf Grundlage der Auswertung der akustischen Signale kann ferner ein spezifisches Haushaltsgerät in der Haushaltsumgebung als Quelle des akustischen Signals bestimmt und dessen Zustand bestimmt werden. Insbesondere kann hierdurch die bei Haushaltsgeräten individuell vorzusehende Hardware und/oder Software zur Durchführung einer Funktionszustandsüberwachung reduziert werden, da die Zustandsüberwachung zentralisiert durch eine oder mehrere Überwachungseinheiten erfolgt.

Ein Funktionszustand eines Haushaltsgeräts soll vorliegend als ein Zustand verstanden werden, welcher charakteristisch dafür ist, ob ein Haushaltsgerät fehlerfrei betreibbar ist oder nicht. Liegt ein fehlerhafter Funktionszustand vor, so ist dies charakteristisch dafür, dass das Haushaltsgerät nicht fehlerfrei betreibbar ist. Das Vorliegen eines fehlerhaften Funktionszustands schließt einen Betrieb des Haushaltsgeräts nicht grundsätzlich aus. In anderen Worten muss nicht jeder fehlerhafte Betriebszustand unmittelbar einen Ausfall des Haushaltsgeräts zur Folge haben. Ein fehlerhafter Funktionszustand kann sich bspw. in einer erhöhten und/oder veränderten Lärmemission, einem erhöhten Energieverbrauch, einer Einbuße wenigstens eines Leistungsparameters, bspw. einer Saugleistung, des Haushaltsgeräts, einer verringerten Qualität der durch das Haushaltsgerät erzielbaren Arbeitsergebnisse oder auch einem zumindest temporären Ausfall des Haushaltsgeräts äußern.

Es ist in Bezug auf die vorliegende Erfindung denkbar, dass einzelne Schritte des Verfahrens zumindest teilweise simultan ablaufen. Zusätzlich oder alternativ ist denkbar, dass zumindest einzelne Schritte des Verfahrens wiederkehrend ausgeführt werden bzw. wiederholt werden. Zusätzlich oder alternativ kann vorgesehen sein, dass zumindest einzelne Schritte des Verfahrens computerimplementiert sind bzw. dass es sich um ein computerimplementiertes Verfahren handelt.

Das Auswerten des akustischen Signals kann zumindest teilweise durch die Überwachungseinheit erfolgen. Zusätzlich oder alternativ kann das Auswerten des akustischen Signals zumindest teilweise durch einen zentralen Server erfolgen. Auch eine kombinierte Auswertung des akustischen Signals, teilweise durch die Überwachungseinheit und teilweise durch den zentralen Rechner, kann vorgesehen sein. Die im Zuge der jeweiligen Auswertungen generierten Auswertungsdatensätze können dann bspw. zu einem einzelnen Auswertungsdatensatz zusammengeführt werden. Die Auswertung innerhalb der Überwachungseinheit, insbesondere durch wenigstens eine Auswerteeinheit, bietet den Vorteil, dass ein Ergebnis schnell und unabhängig von einer Verbindungsqualität (bspw. in Bezug auf das Internet oder ein Mobilfunknetz) an der Überwachungseinheit bereitgestellt werden kann. Eine Auswertung des akustischen Signals in einem zentralen Rechner bietet den Vorteil, dass Rechenkapazitäten zur Durchführung komplexer Rechenoperationen zentralisiert werden können. So kann der Aufbau der Überwachungseinheit kompakter und kostengünstiger gestaltet werden.

In Bezug auf eine zumindest teilweise Auswertung des akustischen Signals durch einen zentralen Rechner, kann vorgesehen sein, dass durch das Verfahren wenigstens eines der folgenden umfasst ist:
- Übermitteln des akustischen Signals von der Überwachungseinheit an einen zentralen Rechner, insbesondere durch eine Kommunikationseinheit der Überwachungseinheit,
- Übermitteln eines Auswertungsdatensatzes von dem zentralen Rechner an die Überwachungseinheit, insbesondere an eine Kommunikationseinheit der Überwachungseinheit.

Das Identifizieren eines Haushaltsgeräts in der Haushaltsumgebung als Quelle des akustischen Signals in Abhängigkeit des Auswertungsdatensatzes kann zumindest teilweise durch einen zentralen Rechner durchgeführt werden. Es kann in diesem Zusammenhang vorgesehen sein, dass durch das Verfahren wenigstens eines der folgenden umfasst ist:
- Übermitteln des Auswertungsdatensatzes von der Überwachungseinheit an einen zentralen Rechner, insbesondere durch eine Kommunikationseinheit der Überwachungseinheit,
- Übermitteln eines Gerätedatensatzes von dem zentralen Rechner an die Überwachungseinheit, insbesondere an eine Kommunikationseinheit der Überwachungseinheit.

Im Rahmen der Erfindung kann es von Vorteil sein, dass das Auswerten des akustischen Signals wenigstens eines der folgenden umfasst:
- Durchführen wenigstens einer Filterung, insbesondere Bandpassfilterung, des akustischen Signals zur Entfernung wenigstens eines Frequenzanteils aus dem akustischen Signal und Bereitstellen wenigstens eines gefilterten akustischen Signals, insbesondere in dem Auswertungsdatensatz,
- Ermitteln eines Frequenzspektrums wenigstens eines, insbesondere gefilterten, akustischen Signals durch eine Frequenzanalyse des, insbesondere gefilterten, akustischen Signals und vorzugsweise Bereitstellen des Frequenzspektrums in dem Auswertungsdatensatz,
- Ermitteln einer Schalldruckpegelinformation, wobei die Schalldruckpegelinformation charakteristisch ist für einen Schalldruckpegel des akustischen Signals und vorzugsweise Bereitstellen der Schalldruckpegelinformation, in dem Auswertungsdatensatz,
- Ermitteln einer psychoakustischen Information, wobei die psychoakustische Information charakteristisch ist für wenigstens eine psychoakustische Größe des akustischen Signals und vorzugsweise Bereitstellen der psychoakustischen Information in dem Auswertungsdatensatz.

Eine psychoakustische Größe kann vorzugsweise eine der folgenden sein:
- Eine Lautheit des akustischen Signals,
- eine Schärfe des akustischen Signals,
- eine Tonheit des akustischen Signals,
- eine Rauhigkeit des akustischen Signals,
- eine Tonhaltigkeit des akustischen Signals,
- eine Impulshaltigkeit des akustischen Signals,
- eine Schwankungsstärke des akustischen Signals.

Durch die Durchführung einer Filterung, insbesondere Bandpassfilterung, kann ein vorgegebener Frequenzbereich aus dem akustischen Signal isoliert werden. So kann bspw. in Bezug auf ein Haushaltsgerät bekannt sein, dass dieses im Betrieb überwiegend Schall in einem spezifischen Frequenzspektrum emittiert. In Bezug auf ein weiteres Haushaltsgerät kann ein davon abweichender Frequenzbereich bekannt sein. Entsprechend können die jeweiligen Frequenzspektren für eine Bandpassfilterung genutzt werden, um störende Frequenzanteile in Vorbereitung einer weiteren Auswertung aus dem akustischen Signal zu entfernen.

Die Durchführung einer Frequenzanalyse erlaubt die Überführung eines, insbesondere gefilterten, akustischen Signals aus dem Ortsraum in den Frequenzraum, sowie die Bereitstellung eines Frequenzspektrums des Signals, welches charakteristisch ist für die in dem Signal enthaltenen Frequenzanteile. Auf Grundlage des Referenzspektrums kann ein vereinfachter Vergleich des akustischen Signals zu bekannten akustischen Signalen durchgeführt werden. Auf Grundlage eines Frequenzspektrums und/oder eines Schalldruckpegels kann ein einfacher Abgleich mit bekannten Daten zur zuverlässigen Bestimmung eines Funktionszustands eines Haushaltsgeräts erfolgen.

Im Rahmen der Erfindung kann es von Vorteil sein, dass das Auswerten des akustischen Signals wenigstens eines der folgenden umfasst:
- Vergleichen des Schalldruckpegels des akustischen Signals mit wenigstens einem Referenzschalldruckpegel,
- Ignorieren des akustischen Signals, sofern der Schalldruckpegel des akustischen Signals den Referenzschalldruckpegel unterschreitet oder diesem entspricht.

In anderen Worten kann vorgesehen sein, dass ein ermittelter Schalldruckpegel des akustischen Signals mit einem Referenzschalldruckpegel verglichen wird. Sollte der Schalldruckpegel des akustischen Signals dem Referenzschalldruckpegel entsprechen, also gleich diesem sein, oder den Referenzschalldruckpegel unterschreiten, so kann vorgesehen sein, dass das akustische Signal ignoriert wird. Unter dem Ignorieren des akustischen Signals soll vorliegend verstanden werden, dass das Verfahren in Bezug auf die Verarbeitung dieses akustischen Signals abgebrochen wird, also keine weitere Auswertung vorgenommen wird und auf Grundlage des akustischen Signals auch kein Haushaltsgerät identifiziert bzw. ein Funktionszustand bestimmt wird. Hierdurch kann der Vorteil erzielt werden, dass Störgeräusche in der Haushaltsumgebung in Bezug auf das vorliegende Verfahren ausgeblendet werden können. Dies wiederum erlaubt es den anfallenden Rechenaufwand zu reduzieren, da unnötige Rechenoperationen vermieden werden. Störgeräusche können bspw. Geräusche sein, welche außerhalb der Haushaltsumgebung emittiert werden und in diese eindringen, bspw. Verkehrslärm. Da solche Störgeräusche oft leiser sind als der Betrieb von Haushaltsgeräten innerhalb der Haushaltsumgebung.

Die Erfassung bzw. Auswertung von psychoakustischen Größen erlaubt eine detaillierte Charakterisierung des akustischen Signals, wodurch eine effiziente und zuverlässige Identifikation von Fehlerzuständen vereinfacht wird.

Im Rahmen der Erfindung ist es denkbar, dass das Auswerten des akustischen Signals wenigstens das Folgende umfasst:
- Ermitteln einer Lokalisierungsinformation, wobei die Lokalisierungsinformation charakteristisch ist für eine Richtung und/oder einen Abstand eines Ursprungsortes des akustischen Signals relativ zu der Überwachungseinheit und vorzugsweise Bereitstellen der Lokalisierungsinformation in dem Auswertungsdatensatz.

In anderen Worten kann vorgesehen sein, dass ein Abstand und/oder eine Richtung eines Ursprungsortes des akustischen Signals relativ zu der Überwachungseinheit ermittelt wird und vorzugsweise im Rahmen einer Lokalisierungsinformation in dem Auswertungsdatensatz bereitgestellt wird. Durch die Ermittlung einer Lokalisierungsinformation ergibt sich der Vorteil, dass der Ursprungsort des akustischen Signals mit bekannten Positionen in der Haushaltsumgebung abgeglichen werden kann. Hierdurch kann das Identifizieren eines Haushaltsgeräts in der Haushaltsumgebung vereinfacht bzw. unterstützt werden. So können bspw. lediglich in der Nähe des Ursprungsorts befindliche Haushaltsgeräte als potentielle Quellen des akustischen Signals in Betracht gezogen werden. Unter einem Ursprungsort des akustischen Signals soll vorliegend derjenige Ort verstanden werden, an welchem das akustische Signal, insbesondere durch ein Haushaltsgerät, vorzugsweise in der Haushaltsumgebung, emittiert wurde.

Ferner ermöglicht die Ermittlung der Lokalisierungsinformation eine verbesserte Interpretation des akustischen Signals in Bezug auf die Bestimmung eines Funktionszustands eines Haushaltsgeräts in der Haushaltsumgebung. Der Abstand zwischen dem Ursprungsort des akustischen Signals und der Überwachungseinheit kann Einfluss auf die Charakteristik des in der Überwachungseinheit empfangenen akustischen Signals haben. Der Einfluss kann durch die Kenntnis der Lokalisierungsinformation im Rahmen der Bestimmung des Funktionszustands genutzt werden um die Zuverlässigkeit bei der Bestimmung des Funktionszustands zu erhöhen.

Es kann im Rahmen der Erfindung vorgesehen sein, dass die Überwachungseinheit, insbesondere wenigstens eine Empfangseinheit der Überwachungseinheit wenigstens zwei, insbesondere räumlich beabstandet angeordnete, Empfangskomponenten umfasst, wobei das Ermitteln der Lokalisierungsinformation wenigstens das Folgende umfasst:
- Auswerten wenigstens eines Laufzeitunterschieds des akustischen Signals in Bezug auf einen Empfang des akustischen Signals durch die wenigstens zwei Empfangskomponenten zur Bestimmung einer Richtung und/oder eines Abstands des Ursprungsortes des akustischen Signals relativ zu der Überwachungseinheit,
- Eintragen einer Position des Ursprungsorts auf einer Umgebungskarte der Haushaltsumgebung, insbesondere in Echtzeit.

In anderen Worten kann wenigstens eine Überwachungseinheit, insbesondere wenigstens eine Empfangseinheit wenigstens einer Überwachungseinheit, wenigstens zwei Empfangskomponenten zum Empfangen des akustischen Signals in der Überwachungseinheit aufweisen. Die wenigstens zwei Überwachungskomponenten können vorzugsweise räumlich beabstandet zueinander in oder an der Überwachungseinheit angeordnet sein. Es können mehr als zwei Empfangskomponenten, insbesondere wenigstens drei oder wenigstens vier Empfangskomponenten umfasst sein. Wenigstens eine Empfangskomponente kann als ein Mikrofon ausgebildet sein.

Zur Bestimmung einer Richtung und/oder eines Abstands des Ursprungsortes des akustischen Signals relativ zu der Überwachungseinheit kann vorzugsweise ein Laufzeitunterschied des akustischen Signals in Bezug auf dessen Empfang durch wenigstens zwei Empfangskomponenten ausgewertet werden. Unter einem Laufzeitunterschied soll die zeitliche Verzögerung des Empfangs des akustischen Signals in den jeweiligen Empfangskomponenten verstanden werden. So kann auf einfache und kostengünstige Weise, insbesondere durch akustische Triangulation, die Richtung und der Abstand des Ursprungsortes des akustischen Signals relativ zu der Überwachungseinheit ermittelt werden.

Wurde der Ursprungsort ermittelt, so kann dieser, insbesondere in Echtzeit, in der Umgebungskarte eingetragen werden. So kann bspw. in dem Fall, dass die Umgebungskarte einem Benutzer angezeigt wird die Position des Ursprungsorts durch diesen Benutzer erkannt werden. Das Eintragen des Ursprungsorts kann wiederkehrend erfolgen. In anderen Worten kann immer dann, wenn ein Ursprungsort ermittelt wurde, dieser in die Umgebungskarte eingetragen bzw. innerhalb der Umgebungskarte aktualisiert werden.

Es kann im Rahmen der Erfindung ferner vorgesehen sein, dass wenigstens eins der folgenden umfasst ist:
- Anzeigen der Umgebungskarte durch wenigstens eine Überwachungseinheit, insbesondere durch eine Anzeigeeinheit der Überwachungseinheit,
- Anzeigen des Ursprungsorts in der Umgebungskarte,
- Anzeigen wenigstens eines Haushaltsgeräts in der Umgebungskarte.

Durch das Eintragen der Position des Ursprungsorts und/oder wenigstens eines Haushaltsgeräts auf einer Umgebungskarte kann einem Benutzer visuell verdeutlicht werden, wo der Ursprungsort des akustischen Signals liegt. Hierdurch kann bspw. eine Hilfestellung des Benutzers bei der Identifikation eines Haushaltsgeräts als Quelle des akustischen Signals in der Haushaltsumgebung auf einfache Weise ermöglicht bzw. entgegengenommen werden.

Eine Haushaltsumgebung soll vorliegend verstanden werden als ein räumlich begrenzter Haushalt. Bspw. kann eine Haushaltsumgebung eine Wohnung oder ein Haus sein. Insbesondere kann eine Haushaltsumgebung vorzugsweise wenigstens einen Raum oder mehrere Räume, insbesondere Wohnräume, umfassen. Eine Umgebungskarte soll ferner verstanden werden als ein, insbesondere parametrisiertes, Abbild der Haushaltsumgebung. Die Umgebungskarte kann vorzugsweise eine Raumaufteilung der Haushaltsumgebung umfassen. Zusätzlich oder alternativ kann die Umgebungskarte die Position wenigstens einer Überwachungseinheit in der Haushaltsumgebung umfassen. Durch eine Parametrisierung der Haushaltsumgebung in Form einer Umgebungskarte kann die Umgebungskarte sowohl im Zuge einer Datenverarbeitung verwendet, als auch bspw. auf einem Display dargestellt werden.

Es ist ferner denkbar, dass wenigstens eines der folgenden umfasst ist:
- Ermitteln einer Umgebungskarte einer Haushaltsumgebung, insbesondere durch wenigstens ein Haushaltsgerät und/oder wenigstens eine Überwachungseinheit,
- Ermitteln wenigstens einer Information über einen Bodenbelag in wenigstens einem Bereich bzw. an wenigstens einer Position innerhalb der Haushaltsumgebung und insbesondere Eintragen dieser Information über den Bodenbelag in die Umgebungskarte.

In anderen Worten kann vorgesehen sein, dass durch das Verfahren das Ermitteln einer Umgebungskarte der Haushaltsumgebung umfasst ist. Die Umgebungskarte kann zumindest teilweise durch wenigstens ein Haushaltsgerät ermittelt werden. So kann bspw. die Haushaltsumgebung von einem Staubsaugerroboter abgefahren und messtechnisch erfasst bzw. parametrisiert werden. Zusätzlich oder alternativ kann die Umgebungskarte zumindest teilweise durch wenigstens eine Überwachungseinheit ermittelt werden. So können durch die Überwachungseinheit Schallsignale in die Haushaltsumgebung ausgesendet werden und Reflexionen dieser Schallsignale (Echos) ausgewertet werden, um Begrenzungen der Haushaltsumgebung bzw. deren Abstand zur Überwachungseinheit zu identifizieren.

Zusätzlich oder alternativ kann vorgesehen sein, dass wenigstens eine Information über einen Bodenbelag in wenigstens einem Bereich bzw. an wenigstens einer Position innerhalb der Haushaltsumgebung ermittelt wird. Diese Information kann vorzugsweise in der Umgebungskarte hinterlegt werden.

Die Ermittlung des Bodenbelags an wenigstens einer Position innerhalb der Haushaltsumgebung kann auf unterschiedliche Arten erfolgen. So kann die Ermittlung zumindest teilweise durch ein Haushaltsgerät erfolgen, welches dazu ausgebildet ist, einen Bodenbelagstyp zu identifizieren. Zusätzlich oder alternativ kann ein Bodenbelag in wenigstens einem Bereich der Haushaltsumgebung durch einen Benutzer definiert werden (Benutzereingabe). Zusätzlich oder alternativ kann vorgesehen sein, dass ein Bodenbelag durch wenigstens eine Überwachungseinheit, insbesondere durch Auswertung wenigstens eines akustischen Signals eines Haushaltsgeräts ermittelt wird. Hierdurch wird die Erkenntnis genutzt, dass ein Haushaltsgerät, z. B. ein Staubsauger, in Abhängigkeit eines Bodenbelags auf dem es eingesetzt wird, eine spezifische Geräuschcharakteristik aufweist.

Es ist ferner denkbar, dass das Auswerten des akustischen Signals wenigstens das Folgende umfasst:
- Ermitteln wenigstens einer Verschattungsinformation wobei die Verschattungsinformation charakteristisch ist für eine Verschattung der Überwachungseinheit durch wenigstens ein Verschattungselement in der Haushaltsumgebung in Bezug auf den Ursprungsort des akustischen Signals und vorzugsweise Bereitstellen der Verschattungsinformation in dem Auswertungsdatensatz.

Die Ermittlung einer Verschattungsinformation ermöglicht eine verbesserte Interpretation des akustischen Signals in Bezug auf die Bestimmung eines Funktionszustands eines Haushaltsgeräts in der Haushaltsumgebung. So kann ein zwischen dem Ursprungsort des akustischen Signals und der Überwachungseinheit befindliches Verschattungselement Einfluss auf die Charakteristik des in der Überwachungseinheit empfangenen akustischen Signals haben. Der Einfluss kann durch die Kenntnis der Verschattungsinformation im Rahmen der Bestimmung des Funktionszustands genutzt werden um die Zuverlässigkeit bei der Bestimmung des Funktionszustands zu erhöhen.

Wenigstens ein Verschattungselement kann vorzugsweise als eine Wand ausgebildet sein. Die Wand kann vorzugsweise eine Innenwand in der Haushaltsumgebung sein. Auch kann wenigstens ein Verschattungselement als ein Möbel, insbesondere als ein Schrank, ausgebildet sein. Zusätzlich oder alternativ kann wenigstens eine Verschattungsinformation wenigstens eine Materialinformation umfassen, wobei die Materialinformation charakteristisch ist für ein Material des Verschattungselements. Als Beispiel sei hierzu angeführt, dass eine Wand in der Haushaltsumgebung eine Trockenbauwand oder eine gemauerte Wand sein kann. Da unterschiedliche Materialien die Charakteristik des akustischen Signals auf abweichende Weise beeinflussen, kann hierdurch die Zuverlässigkeit bei der Bestimmung des Funktionszustands weiter gesteigert werden.

Auch ist es denkbar, dass das Ermitteln wenigstens einer Verschattungsinformation wenigstens das Folgende umfasst:
- Abgleichen der Lokalisierungsinformation mit einer Umgebungskarte der Haushaltsumgebung, wobei die Umgebungskarte eine Position und/oder Größe wenigstens eines Verschattungselements und eine Position der Überwachungseinheit in der Haushaltsumgebung umfasst.

In anderen Worten kann vorgesehen sein, dass zur Ermittlung der Verschattungsinformation ein Abgleich der Lokalisierungsinformation mit der Umgebungskarte der Haushaltsumgebung erfolgt. Unter einem Abgleich soll diesbezüglich insbesondere verstanden werden, dass eine Überprüfung erfolgt, ob der Empfang des akustischen Signals durch die Überwachungseinheit durch ein Verschattungselement beeinflusst wird. In anderen Worten wird überprüft, ob das akustische Signal vor dem Erreichen der Überwachungseinheit wenigstens ein Verschattungselement passieren bzw. durchdringen muss.

Die Umgebungskarte umfasst vorzugsweise die Position und/oder Größe und/oder Materialinformation wenigstens eines Verschattungselements und eine Position der Überwachungseinheit in der Haushaltsumgebung. So kann unter Verwendung der Lokalisierungsinformation überprüft werden, ob das akustische Signal durch wenigstens ein Verschattungselement in Bezug auf einen Empfang des akustischen Signals in der Überwachungseinheit verschattet wird oder nicht. So kann auf einfache Weise festgestellt werden, welche Verschattungselemente in der Haushaltsumgebung in Bezug auf die Veränderung einer Charakteristik des akustischen Signals berücksichtigt werden müssen.

Unter einer Verschattung des akustischen Signals durch ein Verschattungselement in Bezug auf dem Empfang des akustischen Signals in der Überwachungseinheit soll vorliegend verstanden werden, dass das akustische Signal das Verschattungselement durchdringen bzw. passieren muss, bevor es die Überwachungseinheit erreicht.

Im Rahmen der Erfindung ist es optional möglich, dass das Auswerten des akustischen Signals wenigstens das Folgende umfasst:
- Ermitteln wenigstens einer Bodenbelagsinformation, wobei die Bodenbelagsinformation charakteristisch ist für einen Bodenbelag in zumindest einem Bereich der Haushaltsumgebung, insbesondere an dem Ursprungsort des akustischen Signals und vorzugsweise Bereitstellen der Bodenbelagsinformation in dem Auswertungsdatensatz.

Die Ermittlung einer Bodenbelagsinformation ermöglicht eine verbesserte Interpretation des akustischen Signals in Bezug auf die Bestimmung eines Funktionszustands eines Haushaltsgeräts in der Haushaltsumgebung. So können unterschiedliche Bodenbeläge in der Haushaltsumgebung Einfluss auf die Charakteristik des durch das Haushaltsgerät emittierten akustischen Signals haben. Beispielsweise weicht das von einem Staubsauger auf Teppichboden erzeugte Geräusch von einem Geräusch ab, welches der Staubsauger im Betrieb auf einem Fliesenboden oder Holzboden erzeugt. Dieser Einfluss kann durch die Kenntnis der Bodenbelagsinformation im Rahmen der Bestimmung des Funktionszustands genutzt werden um die Zuverlässigkeit bei der Bestimmung des Funktionszustands zu erhöhen.

Ferner kann es im Rahmen der Erfindung vorgesehen sein, dass das Ermitteln wenigstens einer Bodenbelagsinformation wenigstens das Folgende umfasst:
- Abgleichen der Lokalisierungsinformation, insbesondere des Ursprungsorts des akustischen Signals, mit einer Umgebungskarte der Haushaltsumgebung, wobei die Umgebungskarte wenigstens eine Information über einen Bodenbelag in wenigstens einem Bereich der Haushaltsumgebung umfasst.

In anderen Worten kann vorgesehen sein, dass zur Ermittlung der Bodenbelagsinformation ein Abgleich der Lokalisierungsinformation mit der Umgebungskarte der Haushaltsumgebung erfolgt. Unter einem Abgleich soll diesbezüglich insbesondere verstanden werden, dass eine Überprüfung erfolgt, welcher Bodenbelag an der als Ursprungsort des akustischen Signals identifizierten Position innerhalb der Haushaltsumgebung vorliegt.

Die Umgebungskarte umfasst vorzugsweise eine Information über einen Bodenbelag in wenigstens einem Bereich bzw. an wenigstens einer Position innerhalb der Haushaltsumgebung sowie ferner eine Position der Überwachungseinheit in der Haushaltsumgebung. So kann unter Verwendung der Lokalisierungsinformation überprüft werden, welcher Bodenbelag an dem Ursprungsort des akustischen Signals vorliegt.

In Bezug auf die vorliegende Erfindung ist es vorstellbar, dass das Identifizieren eines Haushaltsgeräts in der Haushaltsumgebung wenigstens eines der folgenden umfasst:
- Abgleichen der Lokalisierungsinformation mit einer Umgebungskarte der Haushaltsumgebung, wobei die Umgebungskarte eine Position wenigstens eines Haushaltsgeräts und eine Position der Überwachungseinheit in der Haushaltsumgebung umfasst,
- Auswerten wenigstens einer Benutzereingabe eines Benutzers des Überwachungssystems,
- Übermitteln wenigstens einer Betriebsanfrage von wenigstens einer Überwachungseinheit und/oder einem zentralen Server an wenigstens ein Haushaltsgerät,
- Übermitteln wenigstens einer Betriebsinformation von wenigstens einem Haushaltsgerät an wenigstens eine Überwachungseinheit und/oder einen zentralen Server, wobei die Betriebsinformation charakteristisch dafür ist, ob das Haushaltsgerät in Bezug auf den Zeitpunkt des Empfangs des akustischen Signals in der Überwachungseinheit in Betrieb war.

In anderen Worten kann vorgesehen sein, dass zum Identifizieren eines Haushaltsgeräts als Quelle des akustischen Signals in der Haushaltsumgebung wenigstens ein Abgleich der Lokalisierungsinformation mit der Umgebungskarte der Haushaltsumgebung erfolgt. Die Umgebungskarte umfasst vorzugsweise eine Position wenigstens eines Haushaltsgeräts sowie eine Position der Überwachungseinheit in der Haushaltsumgebung. So kann unter Verwendung der Lokalisierungsinformation überprüft werden, welches Haushaltsgerät sich in der Nähe des Ursprungsorts oder am Ursprungsort des akustischen Signals befindet, wodurch die Identifizierung eines Haushaltsgeräts als Quelle des akustischen Signals vereinfacht werden kann. Zusätzlich oder alternativ kann zur Identifizierung des Haushaltsgeräts als Quelle des akustischen Signals wenigstens eine Benutzereingabe eines Benutzers des Überwachungssystems ausgewertet werden. Bspw. kann in Bezug auf ein auf Grundlage der Lokalisierungsinformation ermitteltes Haushaltsgerät abgefragt werden, ob sich dieses aktuell in Betrieb befindet oder kürzlich befunden hat. So kann bspw. ein Haushaltsgerät als Quelle des akustischen Signals zusätzlich verifiziert werden. Eine solche Benutzereingabe kann bspw. über die Überwachungseinheit und/oder ein mobiles Gerät des Überwachungssystems erfolgen.

Zusätzlich oder alternativ kann vorgesehen sein, dass eine Betriebsanfrage von einer Überwachungseinheit oder einem zentralen Server an ein Haushaltsgerät übermittelt wird. So kann bspw. auf Grundlage der Lokalisierungsinformation eine Gruppe von Haushaltsgeräten als mögliche Quellen des akustischen Signals identifiziert worden sein. Dies kann insbesondere geschehen, wenn mehrere Haushaltsgeräte in der Haushaltsumgebung in unmittelbarer Nähe angeordnet sind. Als Reaktion auf die Betriebsanfrage kann von den betreffenden Haushaltsgeräten eine Betriebsinformation an den zentralen Server oder die Überwachungseinheit übermittelt werden. Dabei ist die Betriebsinformation charakteristisch dafür, ob das Haushaltsgerät in Bezug auf den Zeitpunkt des Empfangs des akustischen Signals in der Überwachungseinheit in Betrieb war. Sollte das Haushaltsgerät nicht in Betrieb gewesen sein, so kann es als potentielle Quelle des akustischen Signals ausgeschlossen werden.

Bei dem Gerätedatensatz kann es sich vorzugsweise um einen Gerätedatensatz zu dem als Quelle des akustischen Signals identifizierten akustischen Gerät handeln. Zusätzlich oder alternativ ist es vorstellbar, dass wenigstens ein Gerätedatensatz wenigstens eines der folgenden Parameter umfasst:
- Einen Gerätetyp und/oder Modellidentifikator des Haushaltsgeräts,
- Ein Alter des Haushaltsgeräts,
- Eine Betriebshistorie des Haushaltsgeräts,
- Eine Wartungshistorie und/oder Schadenshistorie des Haushaltsgeräts.

Ein Modellidentifikator als Parameter soll charakteristisch sein für einen spezifischen Typ eines Haushaltsgeräts. So kann über den Modellidentifikator eindeutig bestimmt werden, um welchen Typ bzw. um welches Modell es sich bei dem als Quelle des akustischen Signals identifizierten Haushaltsgerät handelt. Eine Betriebshistorie des Haushaltsgeräts als Parameter kann vorzugsweise wenigstens charakteristisch für die bisherigen Betriebsstunden eines Haushaltsgeräts sein. Eine Wartungshistorie als Parameter kann vorzugsweise wenigstens charakteristisch sein für wenigstens eine durchgeführte Wartung an dem Haushaltsgerät. Eine Schadenshistorie als Parameter kann vorzugsweise wenigstens charakteristisch sein für einen zurückliegenden oder bestehenden Schaden des Haushaltsgeräts.

Ein Alter des Haushaltsgeräts und/oder eine Betriebshistorie des Haushaltsgeräts und/oder eine Wartungshistorie und/oder eine Schadenshistorie als Parameter ermöglicht eine verbesserte Interpretation des akustischen Signals in Bezug auf die Bestimmung eines Funktionszustands eines Haushaltsgeräts in der Haushaltsumgebung. So können Alterungserscheinungen oder Schäden Einfluss auf die Charakteristik des durch das Haushaltsgerät emittierten akustischen Signals haben. Wartungen und Reparaturen können diesen Einfluss ferner zumindest teilweise wieder kompensieren. Eine genaue Kenntnis der o. g. Aspekte kann daher genutzt werden um einen Funktionszustand des Haushaltsgeräts zuverlässiger bestimmen zu können.

Im Rahmen der Erfindung kann es von Vorteil sein, dass das Bestimmen eines Funktionszustands des Haushaltsgeräts wenigstens eines der folgenden umfasst:
- Bereitstellen wenigstens eines Vergleichsfrequenzspektrums durch eine Gerätewissensbasis, insbesondere in Abhängigkeit des Auswertungsdatensatzes und/oder des Gerätedatensatzes, und Ermitteln einer Frequenzabweichung zwischen dem Vergleichsfrequenzspektrum und dem Frequenzspektrum des akustischen Signals,
- Bereitstellen wenigstens eines Vergleichsschalldruckpegels durch eine Gerätewissensbasis, insbesondere in Abhängigkeit des Auswertungsdatensatzes und/oder des Gerätedatensatzes, und Ermitteln einer Pegelabweichung zwischen dem Vergleichsschalldruckpegel und dem Schalldruckpegel des akustischen Signals,
- Bereitstellen wenigstens einer psychoakustischen Vergleichsgröße durch eine Gerätewissensbasis, insbesondere in Abhängigkeit des Auswertungsdatensatzes und/oder des Gerätedatensatzes, und Ermitteln wenigstens einer psychoakustischen Abweichung zwischen der psychoakustischen Vergleichsgröße und wenigstens einer psychoakustischen Größe des akustischen Signals,
- Bestimmen des Funktionszustands des Haushaltsgeräts in Abhängigkeit der Frequenzabweichung und/oder der Pegelabweichung und/oder wenigstens einer psychoakustischen Abweichung, insbesondere durch eine Zustandswissensbasis.

In anderen Worten kann vorgesehen sein, dass in Abhängigkeit des Auswertungsdatensatzes und des Gerätedatensatzes wenigstens ein Vergleichsfrequenzspektrum und/oder wenigstens ein Vergleichsschalldruckpegel und/oder wenigstens eine psychoakustische Vergleichsgröße durch eine Gerätewissensbasis bereitgestellt wird. Die Gerätewissensbasis stellt dabei einen funktionalen Zusammenhang zwischen dem Gerätedatensatz und/oder dem Auswertungsdatensatz einerseits und wenigstens einem Vergleichsfrequenzspektrum und/oder wenigstens einem Vergleichsschalldruckpegels und/oder wenigstens einer psychoakustischen Vergleichsgröße andererseits dar. In anderen Worten werden wenigstens der Gerätedatensatz und der Auswertungsdatensatz, insbesondere die durch den Auswertungsdatensatz und/oder Gerätedatensatz umfassten Informationen bzw. Parameter, als Eingangsparameter der Gerätewissensbasis genutzt. In Abhängigkeit der Eingangsparameter liefert die Gerätwissensbasis wenigstens ein Vergleichsfrequenzspektrum und/oder wenigstens einen Vergleichsschalldruckpegel als Ausgangsparameter.

Es kann vorgesehen sein, dass für jede erfasste bzw. In der psychoakustischen Information enthaltene psychoakustische Größe des akustischen Signals eine entsprechende psychoakustische Vergleichsgröße bereitgestellt und eine psychoakustische Abweichung ermittelt wird.

Die Gerätewissensbasis kann eine Datenbank umfassen, in welcher wenigstens ein Vergleichsfrequenzspektrum, insbesondere eine Vielzahl von Vergleichsfrequenzspektren, und/oder wenigstens ein Vergleichsschalldruckpegel, insbesondere eine Vielzahl von Vergleichsschalldruckpegeln, hinterlegt ist bzw. sind. Dabei können die Vergleichsfrequenzspektren und/oder Vergleichsschalldruckpegel in Abhängigkeit verschiedener Eingangsparameter hinterlegt sein. So können in Reaktion auf variable Eingangsparameter jeweils passende Vergleichsfrequenzspektren bzw. Vergleichsschalldruckpegel bereitgestellt werden. In anderen Worten sind in der Gerätewissensbasis Vergleichsfrequenzspektren und/oder Vergleichsschalldruckpegel für verschiedene Haushaltsgeräte hinterlegt jeweils für variable Abstände zwischen dem Haushaltsgerät und einem Empfänger eines durch das Haushaltsgerät emittierten akustischen Signals und/oder variable Verschattungszustände des Haushaltsgeräts und/oder unterschiedliche Bodenbeläge auf denen das Haushaltsgerät betrieben wird und/oder verschiedene Altersstufen des Haushaltsgeräts.

Auf Grundlage eines Referenzfrequenzspektrums kann eine Frequenzabweichung zwischen dem Frequenzspektrum des, insbesondere gefilterten, akustischen Signals ermittelt werden. Dabei kann die Frequenzabweichung vorzugsweise charakteristisch sein für eine Amplitudenabweichung zwischen dem Referenzfrequenzspektrum und dem Frequenzspektrum des akustischen Signals. Zusätzlich oder alternativ kann auf Grundlage eines Referenzschalldruckpegels eine Schalldruckpegelabweichung ermittelt werden.

In Abhängigkeit wenigstens einer Frequenzabweichung und/oder wenigstens einer Amplitudenabweichung kann ferner der Funktionszustand des Haushaltsgeräts ermittelt werden. Insbesondere kann der Funktionszustand des Haushaltsgeräts zumindest in Abhängigkeit wenigstens einer Frequenzabweichung und/oder wenigstens einer Regelabweichung durch eine Zustandswissensbasis bestimmt und/oder bereitgestellt werden. Die Zustandswissensbasis stellt dabei einen funktionalen Zusammenhang zwischen einer Regelabweichung und/oder Frequenzabweichung und wenigstens einem potentiellen Fehlerzustand wenigstens eines Haushaltsgeräts, insbesondere Haushaltsgerätetyps, dar. In anderen Worten werden zumindest wenigstens eine Frequenzabweichung und/oder wenigstens eine Pegelabweichung als Eingangsparameter der Zustandswissensbasis genutzt. In Abhängigkeit der Eingangsparameter liefert die Zustandswissensbasis einen Funktionszustand des Haushaltsgeräts Ausgangsparameter. Vorzugsweise können der Gerätedatensatz und/oder Lokalisierungsdatensatz ebenfalls als Eingangsparameter für die Zustandswissensbasis genutzt werden bzw. der Funktionszustand ferner in Abhängigkeit des Gerätedatensatzes und/oder Lokalisierungsdatensatzes ermittelt werden. Durch die Verwendung des Gerätedatensatzes kann bspw. der gesuchte Funktionszustand auf einen bestimmten Haushaltsgerätetyp konkretisiert werden. Ferner können die im Gerätedatensatz und/oder Lokalisierungsdatensatz enthaltenen Informationen Einfluss auf die Charakteristik einer Frequenz- bzw. Pegelabweichung haben.

Die Zustandswissensbasis kann eine Datenbank umfassen, in welcher wenigstens eine Frequenzabweichung und/oder Pegelabweichung für wenigstens einen Funktionszustand, insbesondere eine Vielzahl von Funktionszuständen, wenigstens eines Haushaltsgeräts hinterlegt ist. Auf Grundlage eines Vergleichs einer ermittelten Pegelabweichung bzw. Frequenzabweichung mit den in der Zustandswissensbasis enthaltenen Pegel- bzw. Frequenzabweichungen kann so ein Funktionszustand des Haushaltsgeräts ermittelt werden. Zusätzlich oder alternativ kann die Zustandswissensbasis wenigstens ein neuronales Netz umfassen, wobei insbesondere das neuronale Netz den funktionalen Zusammenhang zwischen einer Pegelabweichung und/oder Frequenzabweichung und wenigstens einem potentiellen Fehlerzustand wenigstens eines Haushaltsgeräts, insbesondere Haushaltsgerätetyps, ausbildet. Auch kann die Zustandswissensbasis mehrere neuronale Netze umfassen, wobei insbesondere jedes neuronale Netz charakteristisch ist für einen spezifischen Haushaltsgerätetyp.

Wenigstens ein neuronales Netz kann mit Trainingsdaten trainiert worden sein, wobei insbesondere die Trainingsdaten wenigstens einen Trainingsdatensatz, insbesondere eine Vielzahl von Trainingsdatensätzen, umfassen. Vorzugsweise kann wenigstens ein Trainingsdatensatz wenigstens eines der folgenden umfassen:
- Einen Gerätedatensatz,
- einen Auswertungsdatensatz,
- eine Frequenzabweichung,
- eine Regelabweichung,
- einen Funktionszustand.

So kann dem neuronalen Netz in Abhängigkeit eines Gerätedatensatzes und/oder Auswertungsdatensatzes und/oder einer Frequenzabweichung und/oder einer Regelabweichung ein konkreter Funktionszustand vorgegeben bzw. angelernt werden. Durch die Berücksichtigung eines Gerätedatensatzes kann das Training auf einen konkreten Haushaltsgerätetyp spezifiziert bzw. weitere Parameter wie ein Alter des Haushaltsgeräts oder eine Betriebshistorie beim Training berücksichtigt werden. Durch die Berücksichtigung des einen Auswertungsdatensatzes können weitere Aspekte wie eine Entfernung des Haushaltsgeräts oder eine Verschattung des Haushaltsgeräts oder ein vorliegender Bodenbelag beim Training berücksichtigt werden.

Im Rahmen der Erfindung kann vorgesehen sein, dass wenigstens ein für wenigstens einen der folgenden Zustände charakteristisch ist:
- Einen fehlerfreien oder fehlerbehafteten Betrieb des Haushaltsgeräts,
- das Fehlen wenigstens eines Zubehörteils des Haushaltsgeräts,
- einen Verschleißzustand wenigstens einer Komponente und/oder wenigstens eines Zubehörteils des Haushaltsgeräts.

Ein fehlerhafter Betrieb eines Haushaltsgeräts kann sich in Bezug auf einen Staubsauger bspw. durch einen vollen Staubsaugerbeutel auszeichnen. Das Gerät ist in diesem Fall grundsätzlich nicht beschädigt und funktionsfähig. Eine Reinigungsaktion mit dem betreffenden Haushaltsgerät wird dennoch kein Ergebnis in der angestrebten Qualität liefern.

Das Fehlen wenigstens eines Zubehörteils kann bspw. in Bezug auf einen Staubsauger das Fehlen eines Staubsaugerbeutels sein. In Bezug auf eine Küchenmaschine kann das Fehlen eines Zubehörteils bspw. das Fehlen eines Werkzeugs, insbesondere eines Messers sein.

Ein Verschleißzustand kann bspw. ein Verschleißzustand eines Motors, insbesondere Antriebsmotors, Gebläses, Lautsprechers oder eines anderen Zubehörteils des Haushaltsgeräts (bspw. ein Messer einer Küchenmaschine oder eine Bürste eines Staubsaugers) sein. Entsprechend kann auf Grundlage eines Verschleißzustands abgeleitet werden ob und wann Wartungsmaßnahmen an dem betreffenden Haushaltsgerät erforderlich werden.

Die Gerätewissensbasis und die Zustandswissensbasis können vorzugsweise als eine kombinierte Wissensbasis als Parameter ausgebildet sein. Wenigstens eine Wissensbasis als Parameter kann auf einem, insbesondere nichtflüchtigen Datenspeicher, gespeichert und weiternutzbar sein.

Es kann im Rahmen der Erfindung vorgesehen sein, dass wenigstens eines der folgenden durch das Verfahren umfasst ist:
- Übermitteln wenigstens eines Funktionszustands von wenigstens einer Überwachungseinheit und/oder einem zentralen Server an wenigstens ein mobiles Gerät.

Hierdurch kann der Vorteil erzielt werden, dass ein Benutzer des Überwachungssystems frühzeitig von etwaigen Fehlfunktionen einzelner Haushaltsgeräte in Kenntnis gesetzt werden kann. So können durch den Benutzer entsprechende Maßnahmen zur Beschaffung von Ersatzteilen, Wartung oder Herstellung eines ordnungsgemäßen Betriebs eingeleitet werden und Folgeschäden an den Haushaltsgeräten effektiv vermieden werden.

Die obenstehende Aufgabe wird ferner gelöst durch ein erfindungsgemäßes Überwachungssystem zur Überwachung eines Funktionszustandes wenigstens eines Haushaltsgeräts gemäß dem zweiten Aspekt der vorliegenden Erfindung. Das Überwachungssystem umfasst wenigstens eine Überwachungseinheit, wobei vorzugsweise das Überwachungssystem gemäß einem Verfahren gemäß dem ersten Aspekt der vorliegenden Erfindung, insbesondere gemäß einem Verfahren nach einem der Ansprüche 1 bis 11, betrieben wird.

Damit ergeben sich in Bezug auf ein erfindungsgemäßes Überwachungssystem die gleichen Vorteile, wie sie bereits in Bezug auf ein erfindungsgemäßes Verfahren beschrieben worden sind.

Es kann im Rahmen der Erfindung vorgesehen sein, dass wenigstens eine Überwachungseinheit stationär, insbesondere ortsfest, innerhalb der Haushaltsumgebung angeordnet ist. Zusätzlich oder alternativ kann vorgesehen sein, dass das Überwachungssystem wenigstens ein Haushaltsgerät umfasst, wobei die Überwachungseinheit in das Haushaltsgerät integriert ist. Mit einer Integration einer Überwachungseinheit in ein Haushaltsgerät ist vorliegend gemeint, dass die Überwachungseinheit in das Haushaltsgerät verbaut bzw. mit diesem verbunden ist. In anderen Worten bildet die Überwachungseinheit einen integralen Bestandteil des Haushaltsgeräts. Insbesondere kann dabei das Haushaltsgerät, in welches die Überwachungseinheit integriert ist, durch das Überwachungssystem bzw. die Überwachungseinheit überwacht werden und/oder weitere Haushaltsgeräte in der Haushaltsumgebung.

Es kann im Rahmen der Erfindung ferner vorgesehen sein, dass das Überwachungssystem wenigstens ein Haushaltsgerät umfasst, wobei insbesondere das Haushaltsgerät zumindest temporär in eine Kommunikationsverbindung mit wenigstens einer Überwachungseinheit und/oder einem zentralen Server bringbar ist.

Es kann im Rahmen der Erfindung vorgesehen sein, dass das Überwachungssystem mehr als eine Überwachungseinheit umfasst. Insbesondere können wenigstens zwei oder wenigstens vier oder wenigstens sechs Überwachungseinheiten durch das Überwachungssystem umfasst sein. Durch die Verwendung mehrerer Überwachungseinheiten ergibt sich der Vorteil, dass eine größere Haushaltsumgebung besser abgedeckt werden kann. Bspw. kann in wenigstens zwei oder allen separaten Räumen der Haushaltsumgebung jeweils wenigstens eine Überwachungseinheit platziert werden. So können akustische Signale der in den betreffenden Räumen betriebenen Haushaltsgeräten durch die jeweiligen Überwachungseinheiten unverfälscht oder im Wesentlichen unverfälscht empfangen und die Ergebnisqualität in Bezug auf die Bestimmung des Funktionszustandes des betreffenden Haushaltsgeräts verbessert werden.

Es kann im Rahmen der Erfindung vorgesehen sein, dass wenigstens eine Überwachungseinheit als ein Tablet, ein Notebook, ein Smartphone oder als ein Smartspeaker ausgebildet ist.

Wenigstens eine Überwachungseinheit kann vorzugsweise wenigstens eines der folgenden umfassen:
- Wenigstens eine Empfangseinheit,
- wenigstens eine Auswerteeinheit,
- wenigstens eine Identifikationseinheit,
- wenigstens eine Zustandsbestimmungseinheit,
- wenigstens eine Kommunikationseinheit,
- wenigstens eine Anzeigeeinheit,
- wenigstens eine Spracheingabeeinheit,
- wenigstens eine Akustikeinheit.

Wenigstens zwei Einheiten aus der Gruppe Empfangseinheit, Auswerteeinheit, Anzeigeeinheit, Spracheingabeeinheit, Akustikeinheit, Identifikationseinheit, Kommunikationseinheit und Zustandsbestimmungseinheit können als eine gemeinsame Einheit ausgebildet sein. Hierdurch ergibt sich der Vorteil eines vergleichsweise kompakten und kostengünstigen Aufbaus einer Überwachungseinheit. Zusätzlich oder alternativ kann wenigstens eine Überwachungseinheit, insbesondere wenigstens eine Einheit aus der Gruppe Empfangseinheit, Auswerteeinheit, Akustikeinheit, Anzeigeeinheit, Spracheingabeeinheit, Kommunikationseinheit Identifikationseinheit und Zustandsbestimmungseinheit, Mittel zur Datenverarbeitung umfassen. Die Mittel zur Datenverarbeitung können wenigstens eine Recheneinheit, insbesondere wenigstens einen Prozessor, und/oder wenigstens einen Arbeitsspeicher und/oder wenigstens einen, vorzugsweise nichtflüchtigen, Datenspeicher umfassen. Zusätzlich oder alternativ ist es denkbar, dass die Mittel zur Datenverarbeitung dazu ausgebildet sind, zumindest einzelne Schritte eines Verfahrens gemäß dem ersten Aspekt der vorliegenden Erfindung, insbesondere ein Verfahren gemäß dem ersten Aspekt der vorliegenden Erfindung, auszuführen.

Wenigstens eine Anzeigeeinheit kann vorzugsweise wenigstens ein, insbesondere berührungssensitives, Display umfassen, wobei insbesondere durch das Display Informationen für einen Benutzer anzeigbar sind. So kann insbesondere eine Umgebungskarte der Haushaltsumgebung durch wenigstens ein Display der Anzeigeeinheit anzeigbar sein. Auch können in der Haushaltsumgebung befindliche Haushaltsgeräte und/oder Ereignisse, wie der Ursprungsort eines akustischen Signals, auf der Umgebungskarte anzeigbar sein. Durch die Verwendung eines berührungssensitiven Displays kann der Vorteil erzielt werden, dass Eingaben eines Benutzers an der Überwachungseinheit durch die Anzeigeeinheit entgegengenommen werden können. Insbesondere können Positionen in der Umgebungskarte durch einen Benutzer markiert werden. Zusätzlich oder alternativ können dem Benutzer Hinweise und/oder Fragen eingeblendet werden, auf die der Benutzer durch entsprechende Eingaben reagieren bzw. antworten kann.

Wenigstens eine Spracheingabeeinheit kann wenigstens eine Empfangskomponente, insbesondere wenigstens ein Mikrofon, umfassen. Durch die Spracheingabeeinheit können insbesondere sprachliche Benutzereingaben in der Überwachungseinheit empfangen und ausgewertet werden.

Wenigstens eine Akustikeinheit kann vorzugsweise wenigstens einen Lautsprecher zur Ausgabe akustischer Signale in die Haushaltsumgebung umfassen. Durch eine Akustikeinheit können akustische Hinweise von der Überwachungseinheit in die Haushaltsumgebung übermittelt werden. Hierdurch kann bspw. ein Benutzer des Überwachungssystems auf einen Fehlerzustand eines Haushaltsgeräts aufmerksam gemacht werden. Zusätzlich oder alternativ kann ein Benutzer zu einer Benutzereingabe aufgefordert werden.

Wenigstens eine Empfangseinheit kann vorzugsweise wenigstens eine, insbesondere wenigstens zwei oder wenigstens drei oder wenigstens vier Empfangskomponenten zum Empfang des akustischen Signals umfassen. Wenigstens eine Empfangskomponente kann vorzugsweise als ein Mikrofon ausgebildet sein.

Wenigstens eine Kommunikationseinheit kann vorzugsweise wenigstens eine, insbesondere drahtlose, Kommunikationsschnittstelle umfassen. Wenigstens eine Kommunikationsschnittstelle kann bspw. als eine Bluetooth-Schnittstelle, WLAN-Schnittstelle oder Mobilfunkschnittstelle ausgebildet sein. So können über die Kommunikationsschnittstelle Daten von der Überwachungseinheit bspw. an einen zentralen Rechner oder ein mobiles Gerät kommuniziert bzw. Daten von einem mobilen Gerät oder einem zentralen Rechner in der Überwachungseinheit empfangen und bereitgestellt werden.

Es ist im Rahmen der Erfindung ferner vorstellbar, dass durch das Überwachungssystem wenigstens ein zentraler Server umfasst ist. Wenigstens ein zentraler Server kann als ein Cloud-System ausgebildet sein. Wenigstens ein zentraler Rechner kann wenigstens eine Kommunikationsschnittstelle umfassen. Insbesondere kann wenigstens ein zentraler Rechner eine Mobilfunkschnittstelle und/oder eine Netzwerkschnittstelle, insbesondere Internetschnittstelle, umfassen, sodass vorzugsweise Daten per Mobilfunk bzw. wenigstens ein Netzwerk, insbesondere das Internet, an den zentralen Rechner übermittelbar sind.

Es kann im Rahmen der Erfindung vorteilhaft vorgesehen sein, dass durch das Überwachungssystem wenigstens ein mobiles Gerät umfasst ist. Wenigstens ein mobiles Gerät kann vorzugsweise als ein Tablet, ein Smartphone, eine Smartwatch oder ein Laptop ausgebildet sein. Wenigstens ein mobiles Gerät kann vorzugsweise wenigstens eine, insbesondere drahtlose, Kommunikationsschnittstelle umfassen. Wenigstens eine Kommunikationsschnittstelle kann bspw. als eine Bluetooth-Schnittstelle, WLAN-Schnittstelle oder Mobilfunkschnittstelle ausgebildet sein.

Es kann in Bezug auf die vorliegende Erfindung vorgesehen sein, dass wenigstens ein Haushaltsgerät als ein Reinigungsroboter oder Staubsauger, insbesondere Staubsaugerroboter, oder als eine Küchenmaschine oder als ein Ofen oder als eine Waschmaschine oder als ein Wäschetrockner oder als eine Spülmaschine oder als ein Haartrockner ausgebildet ist. Zusätzlich oder alternativ kann vorgesehen sein, dass wenigstens ein Haushaltsgerät wenigstens eine Kommunikationsschnittstelle aufweist, wobei insbesondere das Haushaltsgerät über die Kommunikationsschnittstelle, zumindest temporär, in eine, vorzugsweise bidirektionale, Kommunikationsverbindung mit wenigstens einer Überwachungseinheit bringbar ist. So kann bspw. ein Gerätedatensatz oder eine Betriebsinformation an die Überwachungseinheit übermittelt werden bzw. können Anfragen der Überwachungseinheit in dem Haushaltsgerät empfangen werden.

Die obenstehende Aufgabe wird ferner gelöst durch ein erfindungsgemäßes Computerprogrammprodukt gemäß dem dritten Aspekt der vorliegenden Erfindung. Das Computerprogrammprodukt umfasst Befehle, die bewirken, dass ein Überwachungssystem gemäß dem zweiten Aspekt der vorliegenden Erfindung, insbesondere nach einem der Ansprüche 13 oder 14, die Schritte des Verfahrens gemäß dem ersten Aspekt der vorliegenden Erfindung, insbesondere die Schritte des Verfahrens nach einem der Ansprüche 1 bis 11, ausführt.

Damit ergeben sich in Bezug auf ein erfindungsgemäßes Computerprogrammprodukt die gleichen Vorteile, wie sie bereits in Bezug auf ein erfindungsgemäßes Verfahren und/oder ein erfindungsgemäßes Überwachungssystem beschrieben worden sind.

Die obenstehende Aufgabe wird ferner gelöst durch ein computerlesbares Speichermedium gemäß dem vierten Aspekt der vorliegenden Erfindung, wobei auf dem computerlesbaren Speichermedium ein Computerprogrammprodukt gemäß dem dritten Aspekt der vorliegenden Erfindung, insbesondere nach Anspruch 15, gespeichert ist.

Damit ergeben sich in Bezug auf ein erfindungsgemäßes computerlesbares Speichermedium die gleichen Vorteile, wie sie bereits in Bezug auf ein erfindungsgemäßes Verfahren und/oder ein erfindungsgemäßes Überwachungssystem und/oder ein erfindungsgemäßes Computerprogrammprodukt beschrieben worden sind.

Die obenstehende Aufgabe wird ferner gelöst durch ein erfindungsgemäßes Datenträgersignal gemäß dem fünften Aspekt der vorliegenden Erfindung, wobei das Datenträgersignal ein Computerprogrammprodukt gemäß dem dritten Aspekt der vorliegenden Erfindung, insbesondere ein Computerprogrammprodukt nach Anspruch 15, überträgt.

Damit ergeben sich in Bezug auf ein erfindungsgemäßes Datenträgersignal die gleichen Vorteile, wie sie bereits in Bezug auf ein erfindungsgemäßes Verfahren und/oder ein erfindungsgemäßes Überwachungssystem und/oder ein erfindungsgemäßes Computerprogrammprodukt und/oder ein erfindungsgemäßes computerlesbares Speichermedium beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt
Fig. 1 eine schematische Ansicht eines Verfahrens,
Fig. 2 eine schematische Ansicht einer Umgebungskarte,
Fig. 3 eine schematische Ansicht einer Überwachungseinheit,
Fig. 4 eine schematische Ansicht einer akustischen Triangulation,
Fig. 5 eine schematische Ansicht eines Verfahrens,
Fig. 6 eine schematische Ansicht eines Verfahrens,
Fig. 7 eine schematische Ansicht eines Verfahrens und
Fig. 8 eine schematische Ansicht eines Überwachungssystems.

In den Figuren werden für die gleichen technischen Merkmale, auch von unterschiedlichen Ausführungsbeispielen, die identischen Bezugszeichen verwendet.

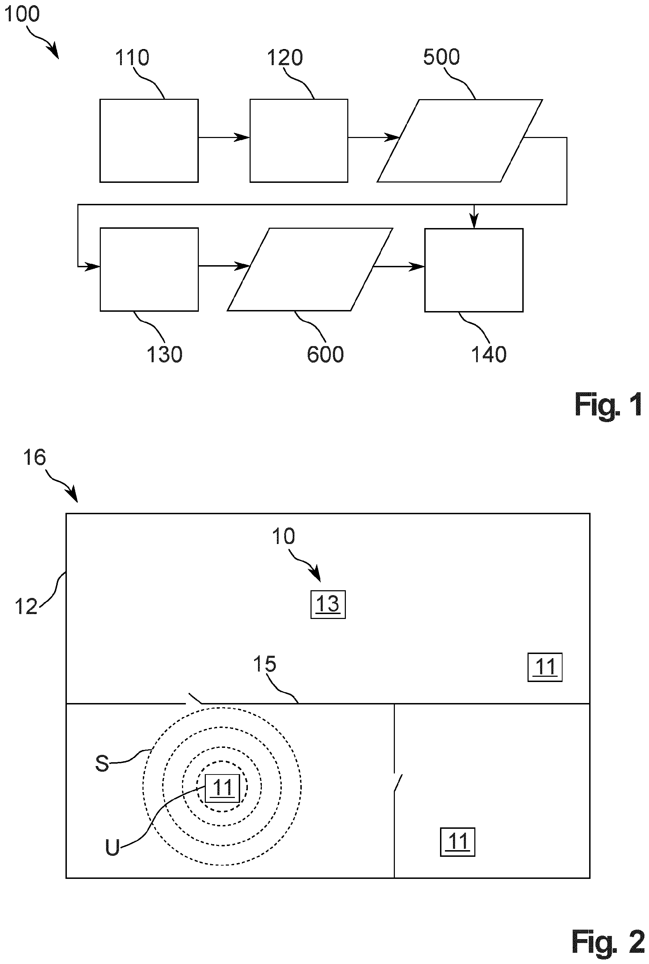

Fig. 1 zeigt eine schematische Ansicht eines Verfahrens 100 zur Überwachung eines Funktionszustandes wenigstens eines Haushaltsgeräts 11 in einer Haushaltsumgebung 12 durch ein Überwachungssystem 10, umfassend wenigstens eine Überwachungseinheit 13, das Verfahren 100 umfassend:
- Empfangen 110 eines akustischen Signals S aus der Haushaltsumgebung 12 in der Überwachungseinheit 13,
- Auswerten 120 des akustischen Signals S und Bereitstellen eines Auswertungsdatensatzes 500,
- Identifizieren 130 eines Haushaltsgeräts 11 in der Haushaltsumgebung 12 als Quelle des akustischen Signals S in Abhängigkeit des Auswertungsdatensatzes 500 und Bereitstellen eines Gerätedatensatzes 600,
- Bestimmen 140 eines Funktionszustands des Haushaltsgeräts 11 in Abhängigkeit des Auswertungsdatensatzes 500 und des Gerätedatensatzes 600.

Fig. 2 zeigt ferner eine schematische Ansicht einer Umgebungskarte 16 einer Haushaltsumgebung 12. Die Haushaltsumgebung 12 umfasst vorliegend drei Räume. In der Haushaltsumgebung 12 sind verschiedene Haushaltsgeräte 11 sowie ein Überwachungssystem 10 angeordnet, wobei das Überwachungssystem 10 wenigstens eine Überwachungseinheit 13 umfasst.

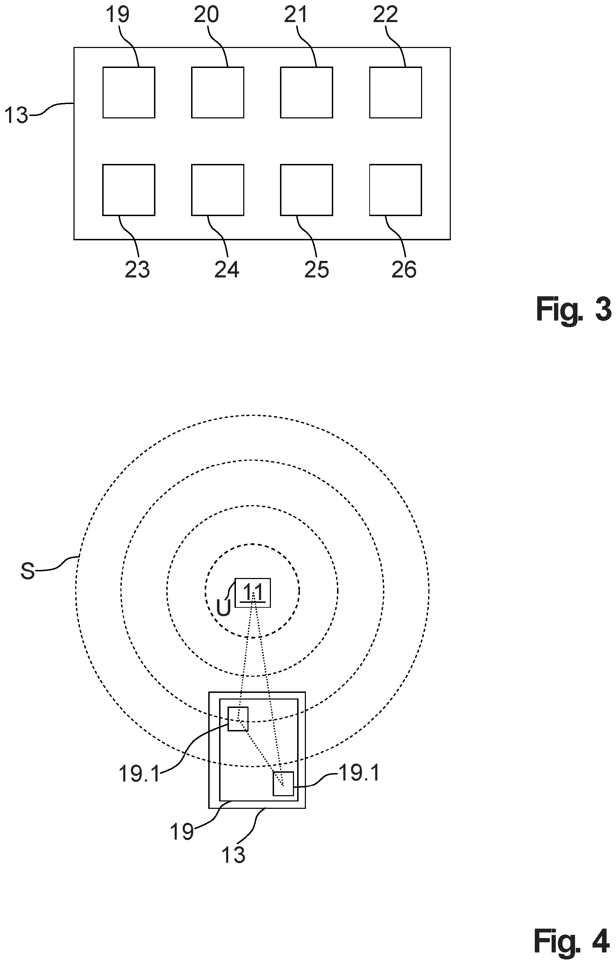

Eine beispielhafte Ausführung einer Überwachungseinheit 13 ist schematisch in Fig. 3 gezeigt, wobei ersichtlich wird, dass die Überwachungseinheit 13 folgendes umfasst:
- Wenigstens eine Empfangseinheit 19,
- wenigstens eine Auswerteeinheit 20,
- wenigstens eine Identifikationseinheit 21,
- wenigstens eine Zustandsbestimmungseinheit 22,
- wenigstens eine Kommunikationseinheit 23,
- wenigstens eine Anzeigeeinheit 24,
- wenigstens eine Spracheingabeeinheit 25,
- wenigstens eine Akustikeinheit 26.

Mit Bezug zu Fig. 2 wird ersichtlich, dass wenigstens ein Haushaltsgerät 11 ein akustisches Signal S innerhalb der Haushaltsumgebung 12 emittiert. Dabei breitet sich das akustische Signal S ausgehend von der Position des Haushaltsgeräts 11 in der Haushaltsumgebung 12, welche somit den Ursprungsort U des akustischen Signals S bildet, in Richtung der Überwachungseinheit 13 aus und kann durch diese empfangen werden. Um zu der Überwachungseinheit 13 zu gelangen, muss das akustische Signal S eine Wand durchdringen, welche somit als Verschattungselement 15 in Bezug auf einen Empfang des akustischen Signals S durch die Überwachungseinheit 13 fungiert.

Fig. 4 zeigt eine schematische Ansicht einer akustischen Triangulation zur Bestimmung einer Richtung und/oder eines Abstands des Ursprungsortes U des akustischen Signals S relativ zu der Überwachungseinheit 13. Die Größenverhältnisse sind (wie auch in anderen Abbildungen) rein schematisch dargestellt. Es wird ersichtlich, dass die Überwachungseinheit 13 eine Empfangseinheit 19 umfasst, wobei die Empfangseinheit 19 wenigstens zwei

Empfangskomponenten 19.1 umfasst, welche räumlich beabstandet zueinander angeordnet sind. Entsprechend können die Laufzeitunterschiede des akustischen Signals S genutzt werden, um unter Kenntnis der Lageverschiebung zwischen den Empfangseinheiten 19.1 diejenige Richtung zu ermitteln, aus welcher das akustische Signal S auf die jeweiligen Empfangskomponenten 19.1 getroffen ist. Der Schnittpunkt dieser jeweils von den Empfangskomponenten 19.1 ausgehenden Richtungen bildet den Ursprungsort U des akustischen Signals S. Dies ist schematisch durch das in Fig. 4 dargestellte, gepunktete Dreieck angedeutet.

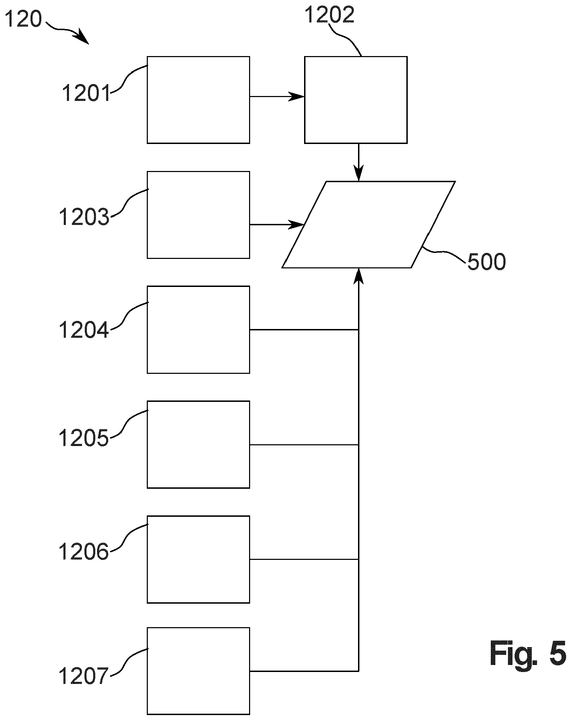

Fig. 5 zeigt ferner schematisch ein Vorgehen bei einem Auswerten 120 des akustischen Signals S, wobei die folgenden umfasst sind:
- Durchführen (1201) wenigstens einer Filterung, insbesondere Bandpassfilterung, des akustischen Signals S zur Entfernung wenigstens eines Frequenzanteils aus dem akustischen Signal S und Bereitstellen wenigstens eines gefilterten akustischen Signals S, insbesondere in dem Auswertungsdatensatz 500,
- Ermitteln (1202) eines Frequenzspektrums wenigstens eines, insbesondere gefilterten, akustischen Signals S durch eine Frequenzanalyse des, insbesondere gefilterten, akustischen Signals S und vorzugsweise Bereitstellen des Frequenzspektrums in dem Auswertungsdatensatz 500,
- Ermitteln (1203) einer Schalldruckpegelinformation, wobei die Schalldruckpegelinformation charakteristisch ist für einen Schalldruckpegel des akustischen Signals S und vorzugsweise Bereitstellen der Schalldruckpegelinformation, in dem Auswertungsdatensatz 500,
- Ermitteln (1204) einer Lokalisierungsinformation, wobei die Lokalisierungsinformation charakteristisch ist für eine Richtung und/oder einen Abstand eines Ursprungsortes U des akustischen Signals S relativ zu der Überwachungseinheit 13 und vorzugsweise Bereitstellen der Lokalisierungsinformation in dem Auswertungsdatensatz 500,
- Ermitteln (1205) wenigstens einer Verschattungsinformation wobei die Verschattungsinformation charakteristisch ist für eine Verschattung der Überwachungseinheit 13 durch wenigstens ein Verschattungselement 15 in der Haushaltsumgebung 12 in Bezug auf den Ursprungsort U des akustischen Signals S und vorzugsweise Bereitstellen der Verschattungsinformation in dem Auswertungsdatensatz 500,
- Ermitteln (1206) wenigstens einer Bodenbelagsinformation wobei die Bodenbelagsinformation charakteristisch ist für einen Bodenbelag in zumindest einem Bereich der Haushaltsumgebung 12, insbesondere an dem Ursprungsort U des akustischen Signals S und vorzugsweise Bereitstellen der Bodenbelagsinformation in dem Auswertungsdatensatz 500,
- Ermitteln (1207) einer psychoakustischen Information, wobei die psychoakustische Information charakteristisch ist für wenigstens eine psychoakustische Größe des akustischen Signals S und Bereitstellen der psychoakustischen Information in dem Auswertungsdatensatz 500.

Die im Zuge der o. g. Schritte ermittelten Informationen werden sodann in einem Auswertungsdatensatz 500 bereitgestellt.

Fig. 5 zeigt ferner schematisch ein Vorgehen bei einem Identifizieren 130 eines Haushaltsgeräts 11 in der Haushaltsumgebung 12 als Quelle des akustischen Signals S, wobei die folgenden umfasst sind:
- Abgleichen 1301 einer Lokalisierungsinformation mit einer Umgebungskarte 16 der Haushaltsumgebung 12, wobei die Umgebungskarte 16 eine Position wenigstens eines Haushaltsgeräts 11 und eine Position der Überwachungseinheit 13 in der Haushaltsumgebung 12 umfasst,
- Auswerten 1302 wenigstens einer Benutzereingabe eines Benutzers des Überwachungssystems 10,
- Übermitteln 1303 wenigstens einer Betriebsanfrage von wenigstens einer Überwachungseinheit 13 und/oder einem zentralen Server an wenigstens ein Haushaltsgerät,
- Übermitteln 1304 wenigstens einer Betriebsinformation von wenigstens einem Haushaltsgerät 11 an wenigstens eine Überwachungseinheit 13 und/oder einen zentralen Server, wobei die Betriebsinformation charakteristisch dafür ist, ob das Haushaltsgerät 11 in Bezug auf den Zeitpunkt des Empfangs des akustischen Signals S in der Überwachungseinheit 13 in Betrieb war.

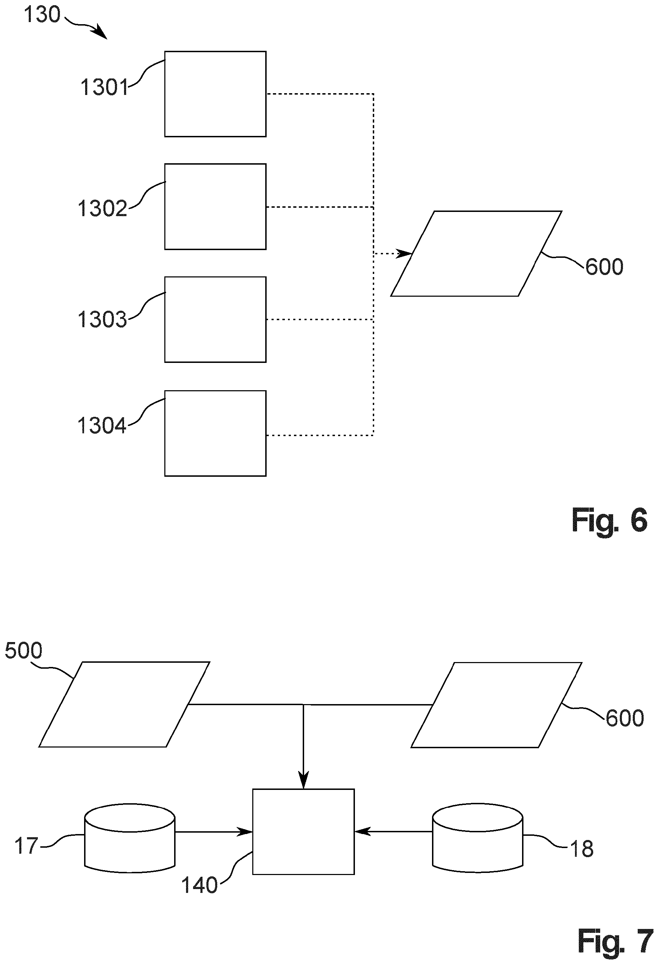

Auf Grundlage der in den o. g. Schritten ermittelten Informationen kann ein Haushaltsgerät 11 als Quelle des akustischen Signals S identifiziert werden und entsprechend ein Haushaltsgerätespezifischer Gerätedatensatz 600 bereitgestellt werden, was in Fig. 6 durch die gestrichelten Linien dargestellt ist.

Fig. 7 zeigt ferner schematisch ein Vorgehen bei einem Bestimmen 140 eines Funktionszustandes des Haushaltsgeräts 11 in Abhängigkeit des Auswertungsdatensatzes 500 und des Gerätedatensatzes 600, wobei folgendes umfasst ist:
- Bereitstellen wenigstens eines Vergleichsfrequenzspektrums durch eine Gerätewissensbasis 17 in Abhängigkeit des Auswertungsdatensatzes 500 und/oder des Gerätedatensatzes 600, und Ermitteln einer Frequenzabweichung zwischen dem Vergleichsfrequenzspektrum und dem Frequenzspektrum des akustischen Signals S,
- Bereitstellen wenigstens eines Vergleichsschalldruckpegels durch eine Gerätewissensbasis 17, insbesondere in Abhängigkeit des Auswertungsdatensatzes 500 und/oder des Gerätedatensatzes 600, und Ermitteln einer Pegelabweichung zwischen dem Vergleichsschalldruckpegel und dem Schalldruckpegel des akustischen Signals S,
- Bereitstellen wenigstens einer psychoakustischen Vergleichsgröße durch eine Gerätewissensbasis 17, insbesondere in Abhängigkeit des Auswertungsdatensatzes 500 und/oder des Gerätedatensatzes 600, und Ermitteln wenigstens einer psychoakustischen Abweichung zwischen der psychoakustischen Vergleichsgröße und wenigstens einer psychoakustischen Größe des akustischen Signals S,
- Bestimmen 140 des Funktionszustands des Haushaltsgeräts 11 in Abhängigkeit der Frequenzabweichung und der Pegelabweichung und wenigstens einer psychoakustischen Abweichung durch eine Zustandswissensbasis 18.

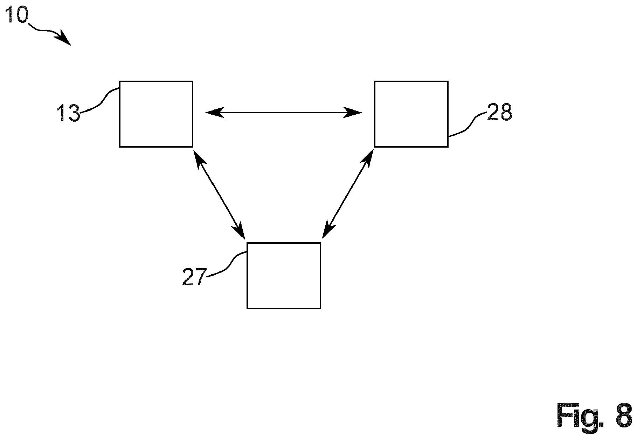

Fig. 8 zeigt ferner eine schematische Ansicht eines Überwachungssystems 10, umfassend wenigstens eine Überwachungseinheit 13, wenigstens einen zentralen Rechner 27 sowie wenigstens ein mobiles Gerät 28, wobei die genannten Komponenten zumindest temporär in eine, insbesondere bidirektionale, Kommunikationsverbindung bringbar sind. Hierdurch können Daten und Informationen zwischen dem zentralen Rechner 27, dem mobilen Gerät 28 und der Überwachungseinheit 13 ausgetauscht werden.

### Bezugszeichenliste

- 10: Überwachungssystem
- 11: Haushaltsgerät
- 12: Haushaltsumgebung
- 13: Überwachungseinheit
- 15: Verschattungselement
- 16: Umgebungskarte
- 17: Gerätewissensbasis
- 18: Zustandswissensbasis
- 19: Empfangseinheit
- 19.1: Empfangskomponente
- 20: Auswerteeinheit
- 21: Identifikationseinheit
- 22: Zustandsbestimmungseinheit
- 23: Kommunikationseinheit
- 24: Anzeigeeinheit
- 25: Spracheingabeeinheit
- 26: Akustikeinheit
- 27: Zentraler Rechner
- 28: Mobiles Gerät

- 100: Verfahren
- 110: Empfangen
- 120: Auswerten
- 1201: Durchführen
- 1202: Ermitteln
- 1203: Ermitteln
- 1204: Ermitteln
- 1205: Ermitteln
- 1206: Ermitteln
- 1207: Ermitteln
- 130: Identifizieren
- 1301: Abgleichen
- 1302: Auswerten
- 1303: Übermitteln
- 1304: Übermitteln

- 140: Bestimmen

- 500: Auswertungsdatensatz
- 600: Gerätedatensatz

- S: Akustisches Signal
- U: Ursprungsort

## Patentansprüche

1. Verfahren (100) zur Überwachung eines Funktionszustandes wenigstens eines Haushaltsgeräts (11) in einer Haushaltsumgebung (12) durch ein Überwachungssystem (10), umfassend wenigstens eine Überwachungseinheit (13), das Verfahren (100) umfassend:
- Empfangen (110) eines akustischen Signals (S) aus der Haushaltsumgebung (12) in der Überwachungseinheit (13),
- Auswerten (120) des akustischen Signals (S) und Bereitstellen eines Auswertungsdatensatzes (500),
- Identifizieren (130) eines Haushaltsgeräts (11) in der Haushaltsumgebung (12) als Quelle des akustischen Signals (S) in Abhängigkeit des Auswertungsdatensatzes (500) und Bereitstellen eines Gerätedatensatzes (600),
- Bestimmen (140) eines Funktionszustands des Haushaltsgeräts (11) in Abhängigkeit des Auswertungsdatensatzes (500) und des Gerätedatensatzes (600).

2. Verfahren (100) nach Anspruch 1,
**dadurch gekennzeichnet,**
**dass** das Auswerten (120) des akustischen Signals (S) wenigstens eines der folgenden umfasst:
- Durchführen (1201) wenigstens einer Filterung (1201), insbesondere Bandpassfilterung, des akustischen Signals (S) zur Entfernung wenigstens eines Frequenzanteils aus dem akustischen Signal (S) und Bereitstellen wenigstens eines gefilterten akustischen Signals (S), insbesondere in dem Auswertungsdatensatz (500),
- Ermitteln (1202) eines Frequenzspektrums wenigstens eines, insbesondere gefilterten, akustischen Signals (S) durch eine Frequenzanalyse des, insbesondere gefilterten, akustischen Signals (S) und vorzugsweise Bereitstellen des Frequenzspektrums in dem Auswertungsdatensatz (500),
- Ermitteln (1203) einer Schalldruckpegelinformation, wobei die Schalldruckpegelinformation charakteristisch ist für einen Schalldruckpegel des akustischen Signals (S) und vorzugsweise Bereitstellen der Schalldruckpegelinformation, in dem Auswertungsdatensatz (500),
- Ermitteln einer psychoakustischen Information, wobei die psychoakustische Information charakteristisch ist für wenigstens eine psychoakustische Größe des akustischen Signals und vorzugsweise Bereitstellen der psychoakustischen Information in dem Auswertungsdatensatz.

3. Verfahren (100) nach einem der vorhergehenden Ansprüche,
**dadurch gekennzeichnet,**
**dass** das Auswerten (120) des akustischen Signals (S) wenigstens das Folgende umfasst:
- Ermitteln (1204) einer Lokalisierungsinformation, wobei die Lokalisierungsinformation charakteristisch ist für eine Richtung und/oder einen Abstand eines Ursprungsortes (U) des akustischen Signals (S) relativ zu der Überwachungseinheit (13) und vorzugsweise Bereitstellen der Lokalisierungsinformation in dem Auswertungsdatensatz (500).

4. Verfahren (100) nach Anspruch 3,
**dadurch gekennzeichnet,**
**dass** die Überwachungseinheit (13), insbesondere wenigstens eine Empfangseinheit (19) der Überwachungseinheit (13) wenigstens zwei, insbesondere räumlich beabstandet angeordnete, Empfangskomponenten (19.1) umfasst, wobei das Ermitteln der Lokalisierungsinformation (1204) wenigstens das Folgende umfasst:
- Auswerten wenigstens eines Laufzeitunterschieds des akustischen Signals (S) in Bezug auf einen Empfang des akustischen Signals (S) durch die wenigstens zwei Empfangskomponenten (19.1) zur Bestimmung einer Richtung und/oder eines Abstands des Ursprungsortes (U) des akustischen Signals (S) relativ zu der Überwachungseinheit (13),
- Eintragen einer Position des Ursprungsorts (U) auf einer Umgebungskarte (16) der Haushaltsumgebung (12).

5. Verfahren (100) nach einem der vorhergehenden Ansprüche,
**dadurch gekennzeichnet,**
**dass** das Auswerten (120) des akustischen Signals (S) wenigstens das Folgende umfasst:
- Ermitteln (1205) wenigstens einer Verschattungsinformation wobei die Verschattungsinformation charakteristisch ist für eine Verschattung der Überwachungseinheit (13) durch wenigstens ein Verschattungselement (15) in der Haushaltsumgebung (12) in Bezug auf den Ursprungsort (U) des akustischen Signals (S) und vorzugsweise Bereitstellen der Verschattungsinformation in dem Auswertungsdatensatz (500).

6. Verfahren (100) nach Anspruch 5,
**dadurch gekennzeichnet,**
**dass** das Ermitteln wenigstens einer Verschattungsinformation wenigstens das Folgende umfasst:
- Abgleichen der Lokalisierungsinformation mit einer Umgebungskarte (16) der Haushaltsumgebung (12), wobei die Umgebungskarte (16) eine Position und/oder Größe wenigstens eines Verschattungselements (15) und eine Position der Überwachungseinheit (13) in der Haushaltsumgebung (12) umfasst.

7. Verfahren (100) nach einem der vorhergehenden Ansprüche,
**dadurch gekennzeichnet,**
**dass** das Auswerten (120) des akustischen Signals (S) wenigstens das Folgende umfasst:
- Ermitteln (1206) wenigstens einer Bodenbelagsinformation wobei die Bodenbelagsinformation charakteristisch ist für einen Bodenbelag in zumindest einem Bereich der Haushaltsumgebung (12), insbesondere an dem Ursprungsort (U) des akustischen Signals (S) und vorzugsweise Bereitstellen der Bodenbelagsinformation in dem Auswertungsdatensatz (500).

8. Verfahren (100) nach Anspruch 7,
**dadurch gekennzeichnet,**
**dass** das Ermitteln wenigstens einer Bodenbelagsinformation wenigstens das Folgende umfasst:
- Abgleichen der Lokalisierungsinformation, insbesondere des Ursprungsorts (U) des akustischen Signals (S), mit einer Umgebungskarte (16) der Haushaltsumgebung (12), wobei die Umgebungskarte (16) wenigstens eine Information über einen Bodenbelag in wenigstens einem Bereich der Haushaltsumgebung (12) umfasst.

9. Verfahren (100) nach einem der vorhergehenden Ansprüche,
**dadurch gekennzeichnet,**
**dass** das Identifizieren (130) eines Haushaltsgeräts (11) in der Haushaltsumgebung (12) als Quelle des akustischen Signals (S) wenigstens eines der folgenden umfasst:
- Abgleichen (1301) der Lokalisierungsinformation mit einer Umgebungskarte (16) der Haushaltsumgebung (12), wobei die Umgebungskarte (16) eine Position wenigstens eines Haushaltsgeräts (11) und eine Position der Überwachungseinheit (13) in der Haushaltsumgebung (12) umfasst,
- Auswerten (1302) wenigstens einer Benutzereingabe eines Benutzers des Überwachungssystems (10),
- Übermitteln (1303) wenigstens einer Betriebsanfrage von wenigstens einer Überwachungseinheit (13) und/oder einem zentralen Server an wenigstens ein Haushaltsgerät (11),
- Übermitteln (1304) wenigstens einer Betriebsinformation von wenigstens einem Haushaltsgerät (11) an wenigstens eine Überwachungseinheit (13) und/oder einen zentralen Server, wobei die Betriebsinformation charakteristisch dafür ist, ob das Haushaltsgerät (11) in Bezug auf den Zeitpunkt des Empfangs des akustischen Signals (S) in der Überwachungseinheit (13) in Betrieb war.

10. Verfahren (100) nach einem der vorhergehenden Ansprüche,
**dadurch gekennzeichnet,**
**dass** der Gerätedatensatz (600) wenigstens eines der folgenden Parameter umfasst:
- Einen Gerätetyp und/oder Modellidentifikator des Haushaltsgeräts (11),
- Ein Alter des Haushaltsgeräts (11),
- Eine Betriebshistorie des Haushaltsgeräts (11),
- Eine Wartungshistorie und/oder Schadenshistorie des Haushaltsgeräts (11).

11. Verfahren (100) nach einem der vorhergehenden Ansprüche,
**dadurch gekennzeichnet,**
**dass** das Bestimmen (140) eines Funktionszustandes des Haushaltsgeräts (11) wenigstens eines der folgenden umfasst:
- Bereitstellen wenigstens eines Vergleichsfrequenzspektrums durch eine Gerätewissensbasis (17), insbesondere in Abhängigkeit des Auswertungsdatensatzes (500) und des Gerätedatensatzes (600), und Ermitteln einer Frequenzabweichung zwischen dem Vergleichsfrequenzspektrum und dem Frequenzspektrum des akustischen Signals (S),
- Bereitstellen wenigstens eines Vergleichsschalldruckpegels durch eine Gerätewissensbasis (17), insbesondere in Abhängigkeit des Auswertungsdatensatzes (500) und des Gerätedatensatzes, und Ermitteln einer Pegelabweichung zwischen dem Vergleichsschalldruckpegel und dem Schalldruckpegel des akustischen Signals (S),
- Bereitstellen wenigstens einer psychoakustischen Vergleichsgröße durch eine Gerätewissensbasis (17), insbesondere in Abhängigkeit des Auswertungsdatensatzes (500) und/oder des Gerätedatensatzes (600), und Ermitteln wenigstens einer psychoakustischen Abweichung zwischen der psychoakustischen Vergleichsgröße und wenigstens einer psychoakustischen Größe des akustischen Signals (S),
- Bestimmen des Funktionszustands des Haushaltsgeräts (11) in Abhängigkeit der Frequenzabweichung und/oder der Pegelabweichung und/oder wenigstens einer psychoakustischen Abweichung, insbesondere durch eine Zustandswissensbasis (18).

12. Verfahren (100) nach einem der vorhergehenden Ansprüche,
**dadurch gekennzeichnet,**
**dass** der Funktionszustand für wenigstens einen der folgenden Zustände charakteristisch ist:
- Einen fehlerfreien oder fehlerbehafteten Betrieb des Haushaltsgeräts (11),
- das Fehlen wenigstens eines Zubehörteils des Haushaltsgeräts (11),
- einen Verschleißzustand wenigstens einer Komponente und/oder wenigstens eines Zubehörteils des Haushaltsgeräts (11).

13. Überwachungssystem (10) zur Überwachung eines Funktionszustandes wenigstens eines Haushaltsgeräts (11), umfassend wenigstens eine Überwachungseinheit (13), wobei das Überwachungssystem (10) gemäß einem Verfahren (100) nach einem der vorhergehenden Ansprüche betrieben wird.

14. Überwachungssystem (10) nach Anspruch 12,
**dadurch gekennzeichnet,**
**dass** wenigstens ein Haushaltsgerät (11) umfasst ist, wobei die Überwachungseinheit (13) in das Haushaltsgerät (11) integriert ist.

15. Computerprogrammprodukt, umfassend Befehle, die bewirken, dass ein Überwachungssystem (10) nach Anspruch 12 die Schritte des Verfahrens (100) nach einem der Ansprüche 1 bis 11 ausführt.
